# EUROPÄISCHE PATENTSCHRIFT

(11) **EP 1 428 087 B1**
(45) Veröffentlichungstag und Bekanntmachung des Hinweises auf die Patenterteilung: **18.10.2006**
(21) Anmeldenummer: 02767464.7
(22) Anmeldetag: 31.08.2002
(51) Int. Cl.: G05B 19/4093, G05B 19/416

(54) **VERFAHREN ZUR BAHNSTEUERUNG**
METHOD FOR TRACK CONTROL
PROCEDE DE COMMANDE DE TRAJECTOIRE

(30) Priorität: 10.09.2001 DE 10144487
(43) Veröffentlichungstag der Anmeldung: 16.06.2004
(73) Patentinhaber: Dr. Johannes Heidenhain GmbH, 83292 Traunreut (DE)
(72) Erfinder: FAUSER, Matthias, 83355 Grabenstätt (DE); KALLENBORN, Steve, Wokingham, Berks RG41 3YT (GB)
(86) Internationale Anmeldenummer: PCT/EP2002/009757
(87) Internationale Veröffentlichungsnummer: WO 2003/023535

(56) Entgegenhaltungen:
- WO-A-98/41910
- US-A- 5 500 927

## Beschreibung

Die Erfindung betrifft ein Verfahren zur Bahnsteuerung nach dem Oberbegriff des Anspruches 1.

In modernen Werkzeugmaschinen werden Numerische Steuerungen (NCs) eingesetzt, um die Positionierung und Bewegung von Werkzeugen relativ zu einem Werkstück zu kontrollieren. Um ein Werkstück entsprechend einer Vorgabe zu bearbeiten, ist es notwendig, das Werkzeug relativ zum Werkstück auf vorher festgelegten Bahnen zu bewegen. Man spricht daher auch von einer Bahnsteuerung. Die Festlegung der gewünschten Bahnen erfolgt in einem Teileprogramm, das durch die Numerische Steuerung abgearbeitet wird. Die Numerische Steuerung setzt dabei die geometrischen Anweisungen des Teileprogramms in Anweisungen an die Lageregelung der verschiedenen Achsen der Werkzeugmaschine um.

Zur Erzeugung des Teileprogramms dienen heute häufig CAD/CAM Systeme, die aus einer vorgegebenen Geometrie des herzustellenden Körpers unter Berücksichtung z.B. des Werkzeugradius Werkzeugbahnen berechnen. Gekrümmte, stetig differenzierbare Flächen des herzustellenden Körpers entstehen durch gekrümmte, stetig differenzierbare Kurven in der Werkzeugbahn. Diese werden durch Polygonzüge angenähert, deren Strecken nicht stetig differenzierbare Ecken einschließen. Natürlich kann ein Programmierer auch direkt solche Teileprogramme erstellen, was aber oft sehr aufwendig ist.

Im Teileprogramm wird also durch die Vorgabe der Werkzeugbahn die Bearbeitung des Werkstücks festgelegt. Betrachtet man diese Werkzeugbahn näher, kann man die durch die Strecken des Polygonzuges eingeschlossenen Ecken in zwei Kategorien einteilen. Zunächst gibt es Ecken, deren Maßhaltigkeit für das spätere Funktionieren des Werkstückes besonders wichtig ist, da durch diese Ecken Kanten des Werkstückes definiert werden. Es gibt aber auch Ecken, die lediglich der Annäherung gekrümmter, stetig differenzierbarer Kurven dienen. Die Maßhaltigkeit beim Abarbeiten dieser Ecken ist hier meist nicht so wichtig. Eine Verrundung dieser Ecken vermeidet sogar eine durch die Annährung durch einen Polygonzug entstehende Facettierung der eigentlich glatten Fläche.

Da nämlich eine Werkzeugmaschine bestimmten Einschränkungen hinsichtlich der maximalen Beschleunigung und auch des maximalen Rucks (Änderung der Beschleunigung) in seinen Bewegungsachsen unterlieget, kann eine im Teileprogramm vorgesehen Ecke zwischen zwei Strecken der Werkzeugbahn nicht mit einer endlichen Geschwindigkeit exakt durchlaufen werden, da hierzu eine unendliche Beschleunigung notwendig wäre. Die maximale Geschwindigkeit, mit der eine Ecke durchlaufen werden kann, hängt daher von der maximal zulässigen Toleranz ab, mit der die tatsächliche Werkzeugbahn von der idealen Werkzeugbahn abweichen darf. Je größer diese Toleranz, desto höher ist die mögliche Geschwindigkeit. Eine im Teileprogramm festgelegte Ecke wird dabei mit zunehmender Geschwindigkeit immer stärker verrundet. Strecken können dagegen mit einer Genauigkeit abgearbeitet werden, die nur von der Güte des geregelten Antriebssystems abhängt.

In einer Bahnsteuerung der herkömmlichen Art kann eine auf alle Ecken der Werkzeugbahn wirkende globale Eckentoleranz festgelegt werden, die zusammen mit den erwähnten Parametern maximale Beschleunigung und maximaler Ruck sowie dem Winkel der Richtungsänderung von einer Strecke der Werkzeugbahn zur nächsten Strecke die maximal zulässige Geschwindigkeit im Bereich der Ecke festlegt.

Die EP 0864952 A1 beschreibt ein Verfahren zur Bearbeitung eines Werkstückes mit maximaler Bearbeitungsgeschwindigkeit, bei der die maximal zulässige Toleranz berücksichtigt wird. Dabei ist es möglich, für unterschiedliche Bereiche der Werkzeugbahn unterschiedliche Toleranzen vorzugeben. Es ist jedoch sehr aufwendig, beim Programmieren einer Werkzeugbahn vor jeder Ecke, die zu einer Kante in der Kontur des Werkstückes führt, eine kleinere Toleranz (Kantentoleranz) anzugeben, und für den dann folgenden Bereich wieder eine größere Toleranz (Kurventoleranz) vorzugeben, wenn durch die programmierten Ecken lediglich eine stetig differenzierbare Kurve durch einen Polygonzug angenähert wird. Üblicherweise wird daher für die Abarbeitung eines Polygonzuges nur eine Toleranz eingestellt, nämlich die kleinere der beiden Toleranzen.

Dies führt dazu, daß Bahnen mit nicht stetig differenzierbaren Ecken immer mit der Kantentoleranz abgearbeitet werden, und so in Bereichen, in der eigentlich die größere Kurventoleranz erlaubt wäre, Ecken mit einer zu geringen Geschwindigkeit abgearbeitet werden. Die Bearbeitungszeit des Werkstückes ist somit unnötig groß.

Die WO98/41910 A1 zeigt ein Verfahren, bei dem nur ein Toleranzwert global vorgegeben wird. Ein Programmschritt des Steuerprogramms bestimmt rechnerisch für jede nicht stetig differenzierbare Ecke einen individuellen Toleranzwert als Funktion des einen global vorgegebenen Toleranzwertes.

Es ist daher Aufgabe der Erfindung, ein Verfahren zur Bahnsteuerung anzugeben, das es bei geringem Aufwand erlaubt, optimierte Bearbeitungsgeschwindigkeiten für eine Werkzeugbahn zu berechnen.

Diese Aufgabe wird gelöst durch ein Verfahren nach Anspruch 1. Vorteilhafte Details des Verfahrens ergeben sich aus den von Anspruch 1 abhängigen Ansprüchen.

Es wird nun vorgeschlagen, einer Numerischen Steuerung wenigstens zwei global wirkende Toleranzen für die Ecken einer programmierten Werkzeugbahn vorzugeben. Eine kleinere Kantentoleranz soll dabei an allen Ecken gelten, die zu Kanten in der Kontur des Werkstückes führen, eine größere Kurventoleranz soll an allen Ecken gelten, die durch die beschriebene Annäherung der Werkzeugbahn an eine stetig differenzierbare gekrümmte Kurve entstanden sind, etwa bei der Programmierung mittels eines CAD/CAM Systems. Eine gröbere Positioniertoleranz kann für Ecken vorgegeben werden, die nicht innerhalb des Werkstücks liegen.

Die programmierte Werkzeugbahn wird durch eine Toleranzzuweisungseinheit analysiert. Diese Toleranzzuweisungseinheit entscheidet für jede in der Werkzeugbahn vorgegebene Ecke, ob durch diese Ecke eine Kante in der Kontur des Werkstückes entsteht, oder ob diese Ecke lediglich durch die Annäherung einer gekrümmten, stetig differenzierbaren Bahn mittels eines Polygonzuges entstanden ist. Im ersten Fall wird dann für die Bearbeitung der Ecke und damit für die Berechnung der erlaubten Bahngeschwindigkeit die Kantentoleranz herangezogen, im zweiten Fall wird hierfür die Kurventoleranz berücksichtigt.

Die Numerische Steuerung kann nach dieser Entscheidung durch die Toleranzzuweisungseinheit die jeweils maximale Geschwindigkeit für das Abfahren jeder Ecke bestimmen. Die Kantentoleranz und die Kurventoleranz müssen dabei nur einmal, etwa zu Beginn des Teileprogramms oder als Konfigurationsparameter in der Bahnsteuerung vorgegeben werden. Hierzu sind in der Numerischen Steuerung entsprechende Eingabemöglichkeiten vorzusehen. Es ist auch möglich, eine der beiden Toleranzen vorzugeben sowie einen Faktor, mit der diese Toleranz beaufschlagt werden muß, um die jeweils andere Toleranz zu erhalten.

Weitere Vorteile sowie Einzelheiten der vorliegenden Erfindung ergeben sich aus der nachfolgenden Beschreibung anhand der Figuren. Dabei zeigt
- Figur 1: ein Beispiel einer vorgegebene Werkzeugbahn
- Figur 2: ein Verfahren zum Abarbeiten dieser Werkzeugbahn
- Figur 3: einen Ausschnitt einer vorgegebene Werkzeugbahn

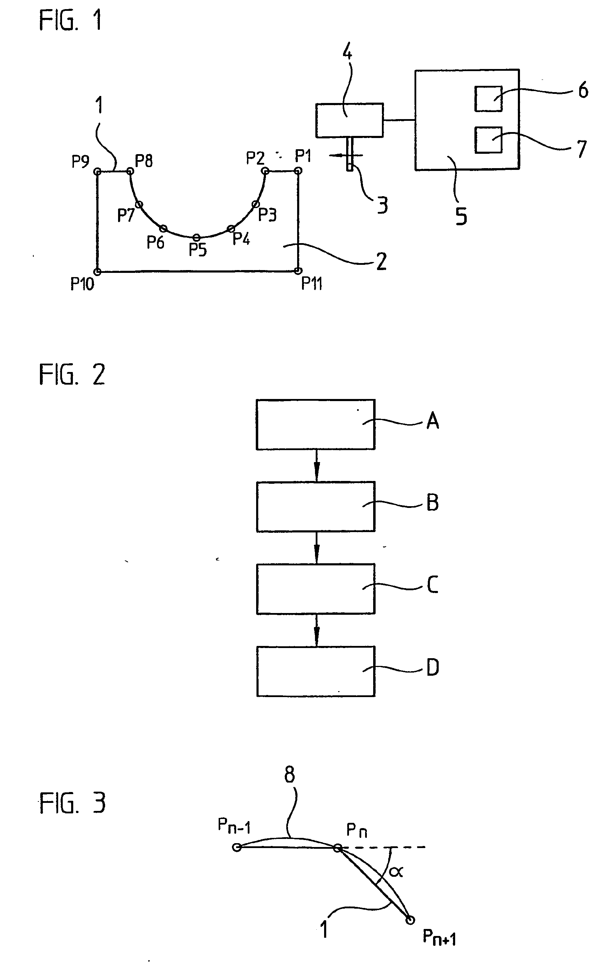

Figur 1 zeigt eine Werkzeugbahn 1, die durch die Stützpunkte P1 - P11 vorgegeben ist. Durch diese Werkzeugbahn 1 nimmt das Werkstück 2 im Querschnitt die Form eines Rechtecks P1 - P9 - P10 - P11 an, dessen Seite P1 - P9 eine halbkreisförmige Ausnehmung P2-P8 aufweist. Der Halbkreis P2 - P8 ist dabei durch einen Polygonzug mit Ecken bei P2, P3, P4, P5, P6, P7 und P8 angenähert. Die Ecken bei P3, P4, P5, P6 und P7 können unter Einhaltung einer größeren Kurventoleranz bearbeitet werden, während die Ecken bei P2, P8, P9, P10 und P11 zu Kanten im Werkstück 2 führen und daher mit der Kantentoleranz abgearbeitet werden müssen. In P1 ist die Vorgabe einer Toleranz nicht notwendig, da die Kante bei P1 vom Werkzeug 3 waagrecht angefahren und senkrecht verlassen werden kann und somit in P1 keine Ecke abgearbeitet werden muß.

Es soll nun in Figur 2 ein Verfahren zur Steuerung der Werkzeugbahn 1 angegeben werden.

In einem Schritt A werden der Numerischen Steuerung die Kantentoleranz und die Kurventoleranz über entsprechende Eingabemöglichkeiten unabhängig voneinander vorgegeben. Dies ist nur einmal notwendig und kann entweder im Teileprogramm oder direkt in der Numerischen Steuerung selbst vorgenommen werden. Die Toleranzen werden beispielsweise in einem Speicher 7 einer Numerischen Steuerung 5 abgelegt und gelten global. Die Kantentoleranz wird kleiner gewählt als die Kurventoleranz. Ein typischer Wert für die Kantentoleranz wäre 10 µm, eine sinnvolle Kurventoleranz könnte etwa einen Faktor zwei darüber liegen und wäre dann beispielsweise 20 µm.

In einem Schritt B wird der Numerischen Steuerung 5 die vom Werkzeug 3 abzuarbeitende Werkzeugbahn 1 vorgegeben, üblicherweise in Form eines Teileprogramms, das ebenfalls im Speicher 7 der Numerischen Steuerung 5 abgelegt wird. Das Teileprogramm im Beispiel der Figur 1 beschreibt eine Werkzeugbahn 1 anhand von Stützpunkten P1 - P11, die beispielsweise durch lineare Strecken miteinander verbunden sind und so einen Polygonzug bilden. Es entstehen nicht stetig differenzierbare Ecken in den Stützpunkten P2-P11.

In einem Schritt C analysiert eine Toleranzzuweisungseinheit 6 die Ecken bei den Stützpunkten P2 - P11 anhand von Kriterien, die weiter unten beschrieben werden. Dabei muß entschieden werden, ob die jeweilige Ecke zu einer Kante im Werkstück führt, oder ob die Ecke lediglich zur Annäherung einer gekrümmten, stetig differenzierbaren Kurve dient. Jeder der Ecken bei den Stützpunkten P2 - P11 der Werkzeugbahn 1 weist die Toleranzzuweisungseinheit 6 im ersten Fall die Kantentoleranz, im zweiten Fall die Kurventoleranz zu.

In einem Schritt D weist die Numerische Steuerung 5 die Werkzeugmaschine 4 an, die vorgegebene Werkzeugbahn 1 abzuarbeiten und berechnet dabei für jede der Ecken bei P2-P11 die jeweils maximal mögliche Geschwindigkeit, die ein Einhalten der für diese Ecken geltenden Toleranzen ermöglicht.

Die Reihenfolge der beschriebenen Schritte ist natürlich nicht auf die Reihenfolge ihrer Beschreibung festgelegt. Wichtig ist lediglich, daß zum Zeitpunkt der Bearbeitung einer Ecke bei P2-P11 die Entscheidung über die zu verwendende Toleranz von der Toleranzzuweisungseinheit 6 getroffen wurde und somit die optimale Geschwindigkeit für die Bearbeitung festgelegt werden kann. Dies muß geschehen unter Berücksichtigung der Tatsache, daß beim Abfahren einer nicht stetig differenzierbaren Ecke mit endlicher Geschwindigkeit wegen der Limitierung durch die maximal mögliche Beschleunigung und den maximal möglichen Ruck zwangsläufig Abweichungen von der vorgegeben Bahn auftreten, die dem Betrage nach nicht größer als die jeweils vorgegebene Toleranz sein dürfen.

Versuche mit realen Teileprogrammen haben ergeben, daß durch die höheren Bearbeitungsgeschwindigkeiten an Ecken mit geltender Kurventoleranz eine Durchsatzerhöhung der beteiligten Werkzeugmaschine 4 um 10% erzielbar ist, verglichen mit einem Bearbeitungszyklus, bei dem auf alle Ecken der Werkzeugbahn 1 die Kantentoleranz wirkt.

Es soll nun anhand von Figur 3 beschrieben werden, anhand welcher Kriterien die Toleranzzuweisungseinheit 6 die Zuweisung der jeweiligen Toleranzen für jede zu bearbeitende Ecke entscheiden kann. Die Werkzeugbahn 1 ist durch die Stützpunkte Pn-1, Pn, Pn+1 vorgegeben. Für die Ecke bei Pn ist zu entscheiden, ob eine kantenbildende Ecke vorliegt, oder eine durch Annäherung an eine stetig differenzierbare gekrümmte Kurve entstandene Ecke.

Zunächst kann der Winkel α der Richtungsänderung der beiden an der Ecke beim Stützpunkt Pn anliegenden Strecken betrachtet werden. Ist dieser kleiner oder gleich einem bestimmten Grenzwinkel, so wird die Kurventoleranz zugewiesen, ist er größer, wird die Kantentoleranz zugewiesen. Als sinnvoller Grenzwert hat sich ein Winkel α von 30 Grad herausgestellt. Es wird dabei davon ausgegangen, daß bei einer Annäherung einer stetig differenzierbaren Kurve die Strecken so kurz gewählt werden, daß zwischen ihnen keine Winkel größer als der Grenzwinkel entstehen. Im Beispiel von Figur 1 ist die Richtungsänderung bei der Ecke P2 90 Grad, es muß hier also die Kantentoleranz zugewiesen werden, während die Richtungsänderung in den Ecken bei P3 - P7 kleiner als 30 Grad ist und daher die Kurventoleranz angewandt werden kann.

Ein weiteres Kriterium kann sein, daß immer dann, wenn die längere der beiden an der Ecke beim Stützpunkt Pn anliegenden Strecke Pn-1 - Pn und Pn - Pn+1 länger als eine bestimmte Grenzlänge ist, von einer kantenbildenden Ecke ausgegangen wird und somit die Kantentoleranz zugewiesen wird. Dieses Kriterium geht davon aus, daß längere Strecken nicht zur Annäherung an eine gekrümmte, stetig differenzierbare Kurve vorgesehen sind und daher die anliegende Ecke eine Kante im Werkstück bildet.

Als zusätzliches Kriterium sei noch erwähnt, daß der Radius eines durch Pn-1, Pn und Pn+1 definierten Kreisbogens 8 bestimmt werden kann. Liegt dieser Radius oberhalb eines Grenzradius (in der Praxis hat sich 500mm bewährt), so wird ebenfalls von einer kantenbildenden Ecke bei Stützpunkt Pn ausgegangen.

Aufgrund geometrischer Überlegungen lassen sich zahlreiche weitere Kriterien finden, mit denen die Toleranzzuweisungseinheit 6 arbeiten kann. Sie beruhen vor allem auf Annahmen über eine sinnvolle Annäherung von gekrümmten, stetig differenzierbaren Kurven durch Polygonzüge. Es können so stärkere (wie das zuerst genannte) und schwächere (wie die beiden anderen beschriebenen) Kriterien entstehen, die mehr oder weniger eindeutig eine Beurteilung der jeweiligen Ecke bei Pn zulassen.

Es ist sinnvoll, bei Verwendung mehrerer Kriterien in der Toleranzzuweisungseinheit 6 einer Ecke bereits dann die Kantentoleranz zuzuweisen, wenn nur eines der Kriterien dieses fordert. Bei Verwendung von schwächeren Kriterien kann es aber auch sinnvoll sein, erst dann die Kantentoleranz zuzuweisen, wenn mehrere dieser Kriterien dafür sprechen. Es sollte berücksichtigt werden, daß es besser ist, eine Ecke, die lediglich eine gekrümmte, stetig differenzierbare Kurve annähert, mit der Kantentoleranz zu bearbeiten, als eine kantenbildende Ecke mit der Kurventoleranz, da im ersten Fall lediglich eine geringere Bahngeschwindigkeit verwendet wird, während im zweiten Fall eine Toleranzvorgabe verletzt werden könnte.

Für spezielle Anwendungen könnte es auch nützlich sein, mit mehr als nur zwei Toleranzen zu arbeiten. Dann könnte über entsprechende geometrische Überlegungen auch die Zuweisung einer Toleranz aus einer Auswahl von drei oder mehr Toleranzen vorgenommen werden, etwa durch Festlegung mehrerer Grenzwinkel für die Richtungsänderung α der Werkzeugbahn 1 an einer Ecke Pn.

Das oben beschriebe Verfahren läßt sich auch in Numerischen Steuerungen 5 einsetzen, die eine direkte Programmierung von Werkzeugbahnsegmenten wie Kreisbögen, Splines oder anderer gekrümmter Werkzeugbahnen 1 im Teileprogramm zulassen. Eine so bereits vorliegende Krümmungsinformation kann dann direkt zur Festlegung der jeweils zu verwendenden Toleranz innerhalb solcher Werkzeugbahnsegmente herangezogen werden. Für die Übergänge zum jeweils nächsten Werkzeugbahnsegment können die oben beschriebenen Kriterien zum Einsatz kommen.

Selbstverständlich kann auch vorgesehen werden, die eine oder beide Toleranzen während der Bearbeitung des Werkstücks zu verändern, falls die Möglichkeit der Vorgabe von nur zwei Toleranzen nicht ausreicht. Dies kann etwa durch entsprechende Befehle im Teileprogramm geschehen.

Eine zusätzliche Option für das beschriebene Verfahren zur Bahnsteuerung ist eine Funktion der Numerischen Steuerung 5, die die programmierte Bahngeschwindigkeit überwacht und bei Überschreiten einer Grenzgeschwindigkeit (beispielsweise 15 - 20 Meter pro Minute) erkennt, daß die Bewegung des Werkzeuges 3 nur eine Positionierbewegung sein kann und daß das Werkzeug 3 sich also nicht im Eingriff mit dem Werkstück 2 befindet. Es kann dann den Ecken dieses Abschnitts der Werkzeugbahn 1 eine weitere Toleranz, nämlich die Positioniertoleranz, zugewiesen werden, die zusätzlich zur Kantentoleranz und zur Eckentoleranz global vorgebbar ist. In diesem Sinne könnte die Überwachung der programmierten Bahngeschwindigkeit auch als weiteres Kriterium für die Toleranzzuweisungseinheit 6 verstanden werden. Ein sinnvoller Wert für die Positioniertoleranz könnte im Bereich von 0,1 -1 mm liegen.

## Patentansprüche

1. Verfahren zur Bahnsteuerung, bei dem in einem Schritt (A) einer Numerischen Steuerung (5) wenigstens zwei globale Toleranzen vorgegeben werden, in einem Schritt (B) der Numerischen Steuerung (5) eine Werkzeugbahn (1) mit Stützpunkten (Pn) vorgegeben wird, an denen jeweils nicht stetig differenzierbare Ecken der Werkzeugbahn (1) liegen, und in einem Schritt (C) eine Toleranzzuweisungseinheit (6) jeder der Ecken bei einem Stützpunkt (Pn) eine der in Schritt (A) festgelegten Toleranzen zuweist.

2. Verfahren nach Anspruch 1, bei dem in Schritt (A) eine globale Kantentoleranz vorgegeben wird, und bei dem in Schritt (C) die Kantentoleranz zugewiesen wird, wenn die Toleranzzuweisungseinheit (6) erkennt, daß die Ecke beim Stützpunkt (Pn) zu einer Kante im Werkstück (2) führt.

3. Verfahren nach Anspruch 1, bei dem in Schritt (A) eine globale Kurventoleranz vorgegeben wird, und bei dem in Schritt (C) die Kurventoleranz zugewiesen wird, wenn die Toleranzzuweisungseinheit (6) erkennt, daß die Ecke beim Stützpunkt (Pn) lediglich der Annäherung einer gekrümmten, stetig differenzierbaren Kurve dient.

4. Verfahren nach Anspruch 2 und 3, bei dem in Schritt (A) die Kantentoleranz kleiner als die Kurventoleranz vorgegeben wird.

5. Verfahren nach einem der vorhergehenden Ansprüche, bei dem in Schritt (A) zusätzlich eine globale Positioniertoleranz vorgegeben wird, und bei der in Schritt (C) die Positioniertoleranz zugewiesen wird, wenn eine programmierte Bahngeschwindigkeit im Bereich der Ecke beim Stützpunkt (Pn) größer als eine Grenzgeschwindigkeit ist.

6. Verfahren nach Anspruch 2, bei dem die Kantentoleranz zugewiesen wird, wenn ein Winkel (α) der Richtungsänderung an der Ecke beim Stützpunkt (Pn) größer als ein Grenzwinkel ist.

7. Verfahren nach Anspruch 2, bei dem die Kantentoleranz zugewiesen wird, wenn die längere der beiden die Ecke beim Stützpunkt (Pn) bildenden Strecken (Pn-1 - Pn) und (Pn - Pn+1) länger als eine Grenzlänge ist.

8. Verfahren nach Anspruch 2, bei dem die Kantentoleranz zugewiesen wird, wenn der Radius eines Kreisbogens 8 durch die Stützpunkte (Pn-1), (Pn) und (Pn+1) großer als ein Grenzradius ist.

9. Verfahren nach einem der vorhergehenden Ansprüche, bei dem in einem Schritt (D) die Numerische Steuerung (5) eine Werkzeugmaschine (4) anweist, die Werkzeugbahn (1) unter Berücksichtigung der für jede Ecke festgelegten Toleranz abzuarbeiten.

10. Numerische Steuerung, mit Mitteln zum Vorgeben von wenigstens zwei globalen Toleranzen, mit Mitteln zum Vorgeben einer Werkzeugbahn (1) mit Stützpunkten (Pn), an denen nicht stetig differenzierbare Ecken der Werkzeugbahn (1) liegen, und einer Toleranzzuweisungseinheit (6), mit der jeder Ecke bei einem Stützpunkt (Pn) eine der wenigstens zwei globalen Toleranzen zuweisbar ist.

## Claims

1. Method for continuous-path control, in which in a step (A) of a numerical control system (5) at least two global tolerances are predetermined, in a step (B) of the numerical control system (5) a tool path (1) is predetermined having support points (Pn), at which there respectively lie corners of the tool path (1) that are not constantly differentiable, and in a step (C) a tolerance assignment unit (6) assigns one of the tolerances defined in step (A) to each of the corners at a support point (Pn).

2. Method according to Claim 1, in which in step (A) a global edge tolerance is predetermined, and in which in step (C) the edge tolerance is assigned when the tolerance assignment unit (6) detects that the corner at the support point (Pn) leads to an edge in the workpiece (2).

3. Method according to Claim 1, in which in step (A) a global curve tolerance is predetermined, and in which in step (C) the curve tolerance is assigned when the tolerance assignment unit (6) detects that the corner at the support point (Pn) merely serves to approach a curved, constantly differentiable curve.

4. Method according to Claim 2 and 3, in which in step (A) the edge tolerance is predetermined as smaller than the curve tolerance.

5. Method according to one of the preceding claims, in which in step (A) a global positioning tolerance is additionally predetermined, and in which in step (C) the positioning tolerance is assigned when a programmed continuous-path speed in the region of the corner at the support point (Pn) is greater than a limit speed.

6. Method according to Claim 2, in which the edge tolerance is assigned when an angle (α) of the change of direction at the corner at the support point (Pn) is greater than a limit angle.

7. Method according to Claim 2, in which the edge tolerance is assigned when the longer of the two sections (Pn-1 - Pn) and (Pn - Pn+1) forming the corner at the support point (Pn) is longer than a limit length.

8. Method according to Claim 2, in which the edge tolerance is assigned when the radius of the arc of the circle 8 through the support points (Pn-1), (Pn) and (Pn+1) is greater than a limit radius.

9. Method according to one of the preceding claims, in which in a step (D) the numerical control system (5) instructs a machine tool (4) to work the tool path (1) taking into consideration the tolerance defined for each corner.

10. Numerical control system with means for predetermining at least two global tolerances, with means for predetermining a tool path (1) with support points (Pn), at which there lie corners of the tool path (1) that are not constantly differentiable, and a tolerance assignment unit (6), with which one of the at least two global tolerances can be assigned to each corner at a support point (Pn).

## Revendications

1. Procédé de commande de trajectoire dans lequel, dans une étape (A) d'une commande numérique (5) au moins deux tolérances globales sont prescrites, dans une étape (B) de la commande numérique (5) une trajectoire d'outil (1) est prescrite avec des points d'appui (Pn) à chacun desquels sont situés des coins non constamment différentiables de la trajectoire d'outil (1), et dans une étape (C) une unité d'assignation de tolérances (6) assigne à chacun des coins situés en un point d'appui (Pn) une des tolérances définies dans l'étape (A).

2. Procédé selon la revendication 1, dans lequel une tolérance d'arête globale est prescrite à l'étape (A) et dans lequel la tolérance d'arête est assignée à l'étape (C) si l'unité d' assignation de tolérances (6) détecte que le coin situé au point d'appui (Pn) conduit à une arête dans la pièce (2).

3. Procédé selon la revendication 1, dans lequel une tolérance de courbe globale est prescrite à l'étape (A) et dans lequel la tolérance de courbe est assignée à l'étape (C) si l'unité d'assignation de tolérances (6) détecte que le coin situé au point d'appui (Pn) ne sert qu'à approcher une courbe arquée constamment différentiable.

4. Procédé selon la revendication 2 et 3, dans lequel la tolérance d'arête prescrite à l'étape (A) est inférieure à la tolérance de courbe.

5. Procédé selon une des revendications précédentes, dans lequel une tolérance de positionnement globale est prescrite à titre supplémentaire à l'étape (A), et dans lequel la tolérance de positionnement est assignée à l'étape (C) si une vitesse de trajectoire programmée dans la zone du coin situé au point d'appui (Pn) est supérieure à une vitesse limite.

6. Procédé selon la revendication 2, dans lequel la tolérance d'arête est assignée si un angle (α) de changement de direction au niveau du coin situé au point d'appui (Pn) est supérieur à un angle limite.

7. Procédé selon la revendication 2, dans lequel la tolérance d'arête est assignée si le plus long des deux trajets (Pn-1- Pn) et (Pn - Pn+1) formant le coin au point d'appui (Pn) est supérieur à une longueur limite.

8. Procédé selon la revendication 2, dans lequel la tolérance d'arête est assignée si le rayon d'un arc de cercle (8) passant par les points d'appui (Pn-1), (Pn) et (Pn+1) est supérieur à un rayon limite.

9. Procédé selon une des revendications précédentes, dans lequel, dans une étape (D), la commande numérique (5) ordonne à une machine-outil (4) de parcourir la trajectoire d'outil (1) en tenant compte de la tolérance définie pour chaque coin.

10. Commande numérique avec des moyens pour prescrire au moins deux tolérances globales, avec des moyens pour prescrire une trajectoire d'outil (1) avec des points d'appui (Pn) auxquels se trouvent des coins non constamment différentiables de la trajectoire d'outil (1), et avec une unité d'assignation de tolérances (6) permettant d'assigner à chaque coin situé à un point d'appui (Pn) une des tolérances globales au nombre d'au moins deux.
